(19) Europäisches Patentamt
European Patent Office
Office européen des brevets

(11) Veröffentlichungsnummer : **0 051 808**
**B1**

(12) # EUROPÄISCHE PATENTSCHRIFT

(45) Veröffentlichungstag der Patentschrift : **04.07.84**

(51) Int. Cl.³ : **C 09 B 62/51**, D 06 P 3/66, D 06 P 3/10

(21) Anmeldenummer : **81109104.0**

(22) Anmeldetag : **28.10.81**

(54) **Wasserlösliche Monoazoverbindungen, Verfahren zu ihrer Herstellung und ihre Verwendung als Farbstoffe.**

(30) Priorität : **06.11.80 DE 3041891**
**01.04.81 DE 3113001**

(43) Veröffentlichungstag der Anmeldung : **19.05.82 Patentblatt 82/20**

(45) Bekanntmachung des Hinweises auf die Patenterteilung : **04.07.84 Patentblatt 84/27**

(84) Benannte Vertragsstaaten : **BE CH DE FR GB IT LI**

(56) Entgegenhaltungen : **DE-A- 2 653 478**

(73) Patentinhaber : **HOECHST AKTIENGESELLSCHAFT**
**Postfach 80 03 20**
**D-6230 Frankfurt am Main 80 (DE)**

(72) Erfinder : **Mischke, Peter, Dr.**
**Eichhornweg 2**
**D-6232 Bad Soden am Taunus (DE)**
Erfinder : **Fuchs, Hermann, Dr.**
**Altenhainer Strasse 2**
**D-6240 Königstein/Taunus (DE)**

**EP 0 051 808 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung liegt auf dem technischen Gebiet der wasserlöslichen Azofarbstoffe, die faserreaktive Eigenschaften besitzen.

Aus der deutschen Auslegeschrift 26 53 478 sind Azofarbstoffe mit faserreaktiven β-Sulfatoäthylsulfonylgruppen bekannt, die N-β-Sulfatoäthylanilin-Kupplungskomponenten enthalten. Diese bekannten Farbstoffe zeigen jedoch gewisse anwendungstechnische Mängel.

Mit der vorliegenden Erfindung wurden nunmehr neue, wertvolle wasserlösliche Azoverbindungen der allgemeinen Formel (1)

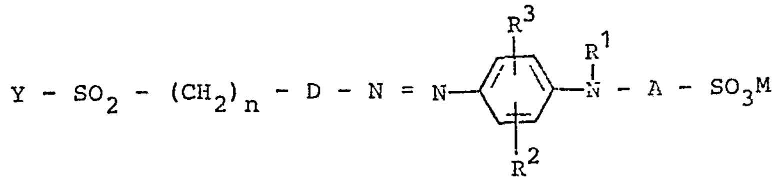 (1)

gefunden. In dieser Formel (1) bedeuten ;

Y ist die Vinylgruppe oder eine Gruppe der Formel $-CH_2-CH_2-Z$, in welcher Z einen organischen oder anorganischen, alkalisch eliminierbaren Rest oder die Hydroxygruppe bedeutet ;

n steht für die Zahl Null, 1 oder 2 ;

D ist der Phenylenrest, der durch einen oder zwei Substituenten aus der Gruppe niederes Alkyl, niederes Alkoxy, Hydroxy, niederes Alkanoylamino, Benzoylamino, durch niederes Alkyl, niederes Alkoxy, Chlor und/oder Sulfo substituiertes Benzoylamino, Chlor, Brom, Fluor und Carboxy und/oder durch eine Nitrogruppe und/oder eine Sulfogruppe und/oder durch eine weitere Gruppe der Formel $Y-SO_2-(CH_2)_n-$, in welcher Y die oben stehende Bedeutung hat und n hier die Zahl 1 oder 2 ist, substituiert sein kann, oder ist der Naphthylenrest, der durch 1 oder 2 Sulfogruppen substituiert sein kann, oder ist der Benzthiazol-2-yl-Rest, der im carbocyclischen Ring die angegebene Gruppe der Formel $Y-SO_2-(CH_2)_n-$ gebunden enthält und in diesem Benzolkern weiterhin durch einen Substituenten aus der Gruppe niederes Alkyl, niederes Alkoxy, Hydroxy, niederes Alkanoylamino, Benzoylamino, durch niederes Alkyl, niederes Alkoxy, Chlor und/oder Sulfo substituiertes Benzoylamino, Nitro, Chlor, Brom und Sulfo substituiert sein kann ;

$R^1$ ist ein Wasserstoffatom, eine niedere Alkylgruppe, eine niedere Alkenylgruppe oder eine niedere, durch Phenyl und/oder Hydroxy substituierte Alkylgruppe, wobei der Phenylrest durch Methyl, Methoxy und/oder Chlor substituiert sein kann, wie insbesondere die Benzyl- oder Phenäthylgruppe und eine Hydroxyalkylgruppe mit 2 bis 4 C-Atomen, oder ist eine mit einer Säure veresterte Hydroxyalkylgruppe mit 2 bis 4 C-Atomen in diesem Alkylrest, wie beispielsweise eine Acetoxyalkyl-, Propionyloxyalkyl- oder Phenylsulfonyloxyalkyl-Gruppe, eine Cyanalkylgruppe mit 2 bis 4 C-Atomen im Alkylrest, eine Carboxy-, Carbonamido- oder Carbalkoxyalkylengruppe mit jeweils 1 bis 4 C-Atomen in dem Alkyl- bzw. Alkylenrest, eine Halogenalkylgruppe mit 2 oder 3 C-Atomen, bevorzugt eine Chloralkylgruppe, oder eine niedere Halogenalkenylgruppe, in welcher das Halogen bevorzugt Chlor oder Brom ist, oder ist eine Gruppe der nachstehend definierten Formel $-A-SO_3M$ ;

A ist der Äthylenrest der Formel $-CH_2-CH_2-$ oder ein Propylenrest der Formel $-CH_2-CH_2-CH_2-$ oder

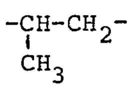 oder 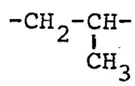 oder 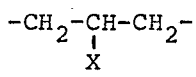 ,

worin X für die Hydroxygruppe oder eine Acyloxygruppe einer niederen Alkancarbonsäure oder einer aromatischen Carbonsäure oder einer niederen Alkansulfonsäure oder einer aromatischen Sulfonsäure, beispielsweise die Acetoxy-, Propionyloxy- oder Phenylsulfonyloxy-Gruppe, steht oder ein Halogenatom, vorzugsweise hiervon ein Chlor- oder Bromatom, ist ;

$R^2$ ist ein Wasserstoffatom, eine niedere Alkylgruppe, bevorzugt hiervon eine Methylgruppe, oder eine niedere Alkoxygruppe, die durch Hydroxy, Acetoxy, Carboxy, Carbonamid, Cyan oder Halogen, wie Chlor und Brom, substituiert sein kann, oder ein Halogenatom, wie ein Chlor-, Brom- oder Fluoratom, bevorzugt hiervon ein Chloratom, oder ist eine Trifluormethylgruppe ;

$R^3$ ist ein Wasserstoffatom, eine niedere Alkylgruppe, bevorzugt hiervon eine Methylgruppe, oder eine niedere Alkoxygruppe, die durch Hydroxy, Acetoxy, Carboxy, Carbonamid, Cyan oder Halogen, wie Chlor oder Brom, substituiert sein kann, oder ist ein Halogenatom, wie Chlor-, Brom- oder Fluoratom, bevorzugt hiervon ein Chloratom ;

M ist ein Wasserstoffatom oder das Äquivalent eines ein-, zwei- oder dreiwertigen Metalls, insbesondere Alkali- oder Erdalkalimetalls, bevorzugt des Natriums, Kaliums oder Calciums.

Die Formelglieder $R^2$ und $R^3$ können zueinander gleiche oder voneinander verschiedene Bedeutungen besitzen.

Die Angaben « niedere » bedeuten hier wie im folgenden, daß der in der Gruppe enthaltene Alkyl- oder Alkylen- oder Alkenylrest aus 1 bis 6 bzw. 2 bis 6 C-Atomen, bevorzugt aus 1 bis 4 bzw. 2 bis 4 C-Atomen, besteht.

Alkalisch eliminierbare Gruppen Z sind beispielsweise Halogenatome, wie das Chlor-, Brom- oder Fluoratom, Estergruppen organischer Carbon- und Sulfonsäuren, wie ein niederer Alkanoyloxyrest, beispielsweise der Acetoxyrest, oder ein Acyloxyrest einer aromatischen Carbon- oder Sulfonsäure, wie der Benzoyloxy-, Sulfobenzoyloxy-, Benzolsulfonyloxy- oder Toluolsulfonyloxyrest, des weiteren die niederen Alkylsulfonylamino- und Arylsulfonylaminogruppen, die Phenoxygruppe, die Dialkylaminogruppen mit Alkylgruppen von jeweils 1 bis 4 C-Atomen, wie die Dimethylamino- oder Diäthylaminogruppe, sowie die Monoestergruppen, beispielsweise der Thioschwefelsäure, der Phosphorsäure und insbesondere der Schwefelsäure.

Die neuen Azoverbindungen können sowohl in Form der freien Säure als auch in Form ihrer Salze vorliegen. Bevorzugt sind sie in Form der Salze, insbesondere der Alkali- und Erdalkalimetallsalze, hiervon insbesondere als Natrium-, Kalium- und auch Calciumsalze.

Die neuen Azoverbindungen finden bevorzugt in Form dieser Salze Verwendung als Farbstoffe zum Färben und Bedrucken von hydroxy- und/oder carbonamidgruppenhaltigen Fasern oder von Leder.

Die vorliegende Erfindung betrifft weiterhin ein Verfahren zur Herstellung der obengenannten und definierten Azoverbindungen der allgemeinen Formel (1).

Dieses Verfahren ist dadurch gekennzeichnet, daß man eine Verbindung der allgemeinen Formel (2)

$$Y—SO_2—(CH_2)_n—D—NH_2 \qquad (2)$$

in welcher D, n und Y die obengenannten Bedeutungen haben, diazotiert und mit einer Kupplungskomponente der in Form der Säure geschrieben, allgemeinen Formel (3)

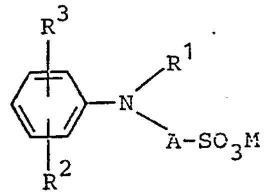

in der M, A, $R^1$, $R^2$ und $R^3$ die obengenannten Bedeutungen haben, kuppelt und gegebenenfalls im Falle, daß Y für die β-Hydroxyäthyl-Gruppe steht, die Azoverbindung der Formel (1) mit dieser β-Hydroxyäthylgruppe mit Hilfe eines Sulfatierungsmittels in die entsprechende Azoverbindung der Formel (1), in welcher Y für die β-Sulfatoäthyl-Gruppe steht, oder mit einem Phosphatierungsmittel in die entsprechende Verbindung der Formel (1), in welcher Y für die β-Phosphatoäthyl-Gruppe steht, bzw. in deren Salze überführt.

Geeignete Sulfatierungsmittel sind beispielsweise 90 bis 100 %ige Schwefelsäure, Chlorsulfonsäure, Amidosulfonsäure oder andere schwefeltrioxidabgebende Verbindungen. Geeignete Phosphatierungsmittel sind beispielsweise konzentrierte Phosphorsäure, Pyrophosphorsäure, Metaphosphorsäure oder Polyphosphorsäure, weiterhin Polyphosphorsäurealkylester, Phosphoroxychlorid oder Gemische aus Phosphorsäure und Phosphor(V)-oxid.

Aromatische Amine der allgemeinen Formel (2), die als Diazokomponenten zur Herstellung der erfindungsgemäßen Verbindungen dienen, sind beispielsweise insbesondere folgende :

4-β-Sulfatoäthylsulfonyl-anilin, 4-β-Chloräthylsulfonyl-anilin, 4-β-Phosphatoäthylsulfonyl-anilin, 4-Vinylsulfonyl-anilin, 4-β-Thiosulfatoäthylsulfonyl-anilin, 2-Sulfo-4-β-sulfatoäthylsulfonyl-anilin, 2-Brom-4-β-sulfatoäthylsulfonyl-anilin, 2-Chlor-4-β-sulfatoäthylsulfonyl-anilin, 2-Chlor-5-β-chloräthylsulfonyl-anilin, 3-β-Sulfatoäthylsulfonyl-anilin, 2-Brom-5-β-sulfatoäthylsulfonyl-anilin, 2,6-Dichlor-4-β-sulfatoäthylsulfonyl-anilin, 2,6-Dibrom-4-β-sulfatoäthylsulfonyl-anilin, 2,5-Dichlor-4-β-sulfatoäthylsulfonyl-anilin, 2-Methyl-5-β-sulfatoäthylsulfonyl-anilin, 2-Methoxy-5-β-sulfatoäthylsulfonyl-anilin, 2-Methoxy-4-β-sulfatoäthylsulfonyl-anilin, 2-Methyl-6-chlor-4-β-sulfatoäthylsulfonyl-anilin, 2,6-Dimethyl-4-β-sulfatoäthylsulfonyl-anilin, 2,6-Dimethyl-3-β-sulfatoäthylsulfonyl-anilin, 2,5-Dimethoxy-4-β-sulfatoäthylsulfonyl-anilin, 2-Methoxy-5-methyl-4-β-sulfatoäthylsulfonyl-anilin, 2-Nitro-4-β-sulfatoäthylsulfonyl-anilin, 4-Nitro-2-β-sulfatoäthylsulfonyl-anilin, 4-Aminobenzoesäure-(3'-β-sulfatoäthylsulfonyl)-anilid, 6-β-Sulfatoäthylsulfonyl-2-naphthyl-amin, 1-Sulfo-6-β-sulfatoäthylsulfonyl-2-naphthylamin, 8-β-Sulfatoäthylsulfonyl-2-naphthylamin, 6-Sulfo-8-β-sulfatoäthylsulfonyl-2-naphthylamin, 6-Vinylsulfonyl-2-aminobenzthiazol, 6-β-Sulfatoäthylsulfonyl-2-aminobenzthiazol, 4-ω-(β-Sulfatoäthylsulfonyl)-tolylamin, 3-ω-(β-Sulfatoäthylsulfonyl)-tolylamin, 6-Methoxy-3-ω-(β-sulfatoäthylsulfonyl)-tolylamin, 4-Methoxy-3-ω-(β-sulfatoäthylsulfonyl)-tolylamin, 4-Methyl-3,5-bis-(β-sulfatoäthylsulfonyl-methyl)-anilin, 4-ω-(β-Sulfatoäthylsulfonyl)-äthyl-anilin, 3-ω-(β-Sulfatoäthylsulfonyl)-äthyl-anilin, 5-(β-Sulfatoäthylsulfonyl-methyl)-1-naphthylamin und deren β-Hydroxyäthylsulfonyl-Abkömmlinge.

Die Verbindungen der Formel (2) sind bekannt und lassen sich in der in der Literatur vielfach beschriebenen Weise herstellen. Beispielsweise erhält man die bevorzugten Verbindungen der Formel (2) mit einer β-Sulfatoäthylsulfonylgruppe aus den entsprechenden β-Hydroxyäthylsulfonyl-Verbindungen durch Veresterung, beispielsweise durch wasserhaltige oder konzentrierte Schwefelsäure oder mittels Amidosulfonsäure, wie beispielsweise durch Eintragen der entsprechenden β-Hydroxyäthylsulfonyl-aniline und -naphthylamine in eine äquimolare Menge 60 %iger Schwefelsäure und anschließendes Erhitzen in analoger Weise zu dem in der deutschen Patentschrift 1 150 163 beschriebenen Verfahren oder wie beispielsweise durch Lösen der β-Hydroxyäthylsulfonylaniline oder -naphthylamine in überschüssiger konzentrierter Schwefelsäure oder 100 %iger Schwefelsäure (Monohydrat) bei Raumtemperatur oder durch Umsetzung mit Amidosulfonsäure in Anwesenheit von Pyridin oder einer Pyridinbase in analoger Weise zu den in der deutschen Patentschrift 1 443 877 beschriebenen Veresterungsverfahren. Die so hergestellten β-Sulfatoäthylsulfonyl-aniline und -naphthylamine können für den Einsatz im erfindungsgemäßen Verfahren auch in nicht isolierter Form in Form des aus der Veresterung anfallenden Reaktionsgemisches verwendet werden.

Die zur Synthese der Verbindungen der allgemeinen Formel (1) als Kupplungskomponenten verwendeten Sulfoalkylaniline der allgemeinen Formel (3) können ebenfalls in bekannter Weise hergestellt werden, so beispielsweise nach den aus den Deutschen Offenlegungsschriften 1 481 831 und 1 493 636 bekannten Verfahrensweisen, weiterhin nach den Methoden, die in R.B. Wagner und H.D. Zock, Synthetic Organic Chemistry, John Wiley u. Sons, Inc., New York, 1953, Seiten 812-819, beschrieben sind, des weiteren durch Umsetzung von α,α'-Dichlorhydrin mit Natriumsulfit gemäß DE-PS 258 473 und Kondensation dieses Reaktionsproduktes mit einem aromatischen Amin, wie bspw. nach der Reaktionsgleichung

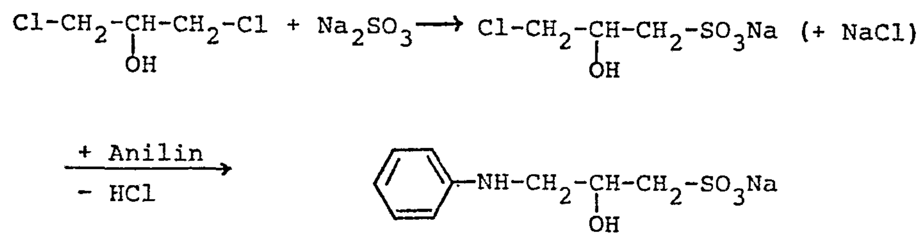


oder durch Umsetzung von Propansulton mit aromatischen Aminen.

β-Sulfoäthylanilin-Derivate lassen sich auch durch Umsetzung von β-Chloräthansulfonsäure bzw. deren Salzen mit aromatischen Aminen herstellen, beispielsweise nach der von J.W. James in Journ. prakt. Chem. [2] *31*, 413 (1885) beschriebenen Methode. Sie sind aber auch in sehr guter Reinheit beispielsweise durch Addition von Vinylsulfonylfluorid an Anilinderivate und nachfolgende alkalische Hydrolyse der Sulfofluorid-Gruppe herstellbar.

Verbindungen der allgemeinen Formel (3), die als Kupplungskomponenten zur Herstellung der erfindungsgemäßen Verbindungen dienen, sind beispielsweise :

N-β-Sulfoäthyl-anilin, N-β-Sulfoäthyl-2-chloranilin, N-β-Sulfoäthyl-3-chloranilin, N-β-Sulfoäthyl-2-methylanilin, N-β-Sulfoäthyl-2-methoxyanilin, N-β-Sulfoäthyl-2-methyl-5-chloranilin, N-β-Sulfoäthyl-2-methoxy-5-chloranilin, N-β-Sulfoäthyl-2-chlor-5-methoxyanilin, N-β-Sulfoäthyl-2,5-dichloranilin, N-β-Sulfoäthyl-N-methyl-anilin, N-β-Sulfoäthyl-N-äthyl-anilin, N-β-Sulfoäthyl-N-äthyl-3-methyl-anilin, N-β-Sulfoäthyl-N-äthyl-3-chloranilin, N-β-Sulfoäthyl-N-allyl-anilin, N-β-Sulfoäthyl-N-benzyl-anilin, N-β-Sulfoäthyl-N-phenäthyl-anilin, N-β-Sulfoäthyl-N-β-carbonamidoäthyl-anilin, N-β-Sulfoäthyl-N-β-carboxyäthyl-anilin, N-β-Sulfoäthyl-N-β-cyanäthyl-anilin, N-β-Sulfoäthyl-N-β-acetoxyäthyl-anilin, N-β-Sulfoäthyl-N-β-hydroxyäthyl-anilin, N-β-Sulfoäthyl-N-äthyl-2-methoxy-5-chloranilin, N-β-Sulfoäthyl-N-β-hydroxyäthyl-2-methoxy-5-chloranilin, N-β-Sulfoäthyl-N-β-hydroxyäthyl-3-chloranilin, N-β-Sulfoäthyl-N-β-carboxyäthyl-3-chloranilin, N,N-Bis-(β-sulfoäthyl)-anilin, N,N-Bis-(β-sulfoäthyl)-3-methyl-anilin, N,N-Bis-(β-sulfoäthyl)-3-chloranilin, N-γ-Sulfopropyl-anilin, N-γ-Sulfopropyl-3-chloranilin, N-γ-Sulfopropyl-2-methyl-5-chloranilin, N-(γ-Sulfo-β-hydroxypropyl)-2-methoxy-5-chloranilin, N-(γ-Sulfo-β-hydroxypropyl)-2-chloranilin, N-(γ-Sulfo-β-hydroxypropyl)-2,5-dichloranilin, N-(γ-Sulfo-β-hydroxypropyl)-N-äthylanilin, N-(γ-Sulfo-β-hydroxypropyl)-N-äthyl-3-methylanilin, N-(γ-Sulfo-β-acetoxypropyl)-N-β-acetoxyäthyl-anilin, N-(γ-Sulfo-β-hydroxypropyl)-N-phenäthyl-anilin, N-(γ-Sulfo-β-hydroxypropyl)-N-(β-hydroxyäthyl)-2-methoxy-5-chloranilin, N-(γ-Sulfo-β-hydroxypropyl)-anilin, N-(γ-Sulfo-β-hydroxypropyl)-2-chlor-3-methyl-anilin, N-(γ-Sulfopropyl)-N-äthyl-3-methylanilin, N-(γ-Sulfo-β-hydroxypropyl)-N-β-carboxyäthyl-3-chloranilin, N-(β-Sulfo-α-methyl-äthyl)-anilin, N-(β-Sulfo-α-methyl-äthyl)-2-methoxy-5-chloranilin, N,N-Bis-(γ-sulfo-β-hydroxypropyl)-3-chloranilin, N-(γ-Sulfopropyl)-2,5-dichloranilin.

Die Diazotierung der Amine der allgemeinen Formel (2) kann nach allgemein bekannten Methoden, beispielsweise durch Einwirkung von Alkalinitrit und einer anorganischen Säure, wie Salzsäure, Schwefelsäure oder Phosphorsäure, oder durch Nitrosylschwefelsäure erfolgen.

Die Kupplungsreaktion mit den Kupplungskomponenten der allgemeinen Formel (3) kann ebenfalls in an und für sich bekannter Weise in neutralem bis saurem Milieu, bevorzugt in einem pH-Bereich

zwischen 1 und 7 und bei einer Temperatur zwischen – 5 °C und + 25 °C, gegebenenfalls in Gegenwart von Natriumacetat oder ähnlichen, die Kupplungsgeschwindigkeit beeinflussenden Puffersubstanzen oder Katalysatoren, wie beispielsweise Dimethylformamid oder Pyridin, vorgenommen werden.

Die erfindungsgemäß hergestellten Verbindungen der Formel (1) können durch Aussalzen mittels Elektrolyten, beispielsweise Natriumchlorid oder Kaliumchlorid, vorteilhaft nach Einstellung des Reaktionsgemisches auf einen pH-Wert von 3,5 bis 7,0, aus der Reaktionslösung abgeschieden werden ; nach Filtration werden sie getrocknet. Weiterhin lassen sich die erfindungsgemäßen Verbindungen aus ihren Syntheseansätzen durch Eindampfen oder Sprühtrocknen isolieren. In Fällen, in denen in der anfallenden Reaktionslösung größere Mengen an Sulfationen vorliegen, empfiehlt es sich, die Sulfationen vor der Sprühtrocknung als schwerlösliche Salze, beispielsweise als Calciumsulfat, auszufällen. Es ist auch möglich, die nach der Synthese erhaltenen Lösungen der Verbindung der Formel (1), gegebenenfalls nach Zusatz einer Puffersubstanz, direkt als Flüssigpräparation der färberischen Verwendung zuzuführen.

Die neuen Verbindungen der Formel (1) eignen sich als Farbstoffe, insbesondere als faserreaktive Farbstoffe ; sie lassen sich bevorzugt auf den nachgenannten Substraten nach den für Reaktivfarbstoffe bekannten Anwendungsverfahren applizieren und echt fixieren.

Gegenstand der vorliegenden Erfindung ist somit auch die Verwendung der Verbindungen der Formel (1) als Farbstoffe, insbesondere zum Färben und Bedrucken von Cellulosefasern und natürlichen oder synthetischen Polyamidfasern oder von Leder bzw. ein Verfahren zum Färben und Bedrucken von Cellulosefasermaterialien oder natürlichen oder synthetischen Polyamidfasermaterialien oder von Leder unter Verwendung der Verbindungen der Formel (1). Als Cellulosefasermaterialen sind Baumwolle und regenerierte Cellulose, wie Viskoseseide, sowie Leinen, Hanf und Jute bevorzugt. Geeignete Polyamidfasermaterialien sind insbesondere Wolle und andere Tierhaare sowie Seide, von den synthetischen Polyamiden insbesondere Polyamid-6,6, Polyamid-6, Polyamid-11 oder Polyamid-4.

Beispielsweise erhält man mit den erfindungsgemäßen Azoverbindungen auf Cellulosefasern nach dem Ausziehverfahren unter Verwendung verschiedenster Alkalizusätze aus langer Flotte Färbungen mit sehr guter Farbausbeute. Mit ebenfalls ausgezeichneten Farbausbeuten färben sie Cellulosefasern nach den bekannten Klotzverfahren, wobei die Verbindung der Formel (1) mittels Alkali durch Verweilen bei Raumtemperatur, durch Dämpfen oder mit Trockenhitze fixiert werden kann. Bei den Druckverfahren können ebenfalls die üblichen einphasigen Verfahren in Anwesenheit eines säurebindenden Mittels oder alkalispendenden Mittels, wie beispielsweise Natriumbicarbonat, Natriumcarbonat oder Natriumtrichloracetat, in der Druckpaste mit anschließendem Fixieren durch Dämpfen, beispielsweise bei 100-103 °C, oder die zweiphasigen Verfahren unter Verwendung neutraler oder schwach saurer Druckpasten, nach deren Druck das Fasermaterial entweder durch ein heißes elektrolythaltiges alkalisches Bad geführt oder aber mit einer alkalischen elektrolythaltigen Klotzflotte überklotzt und die Verbindung der Formel (1) danach durch Dämpfen oder Trockenhitze fixiert wird, verwendet werden. Man erhält mit diesen Verfahren farbstarke Drucke mit gutem Stand der Konturen und einem klaren Weißfond. Die Qualität der Drucke wird von wechselnden Fixierbedingungen praktisch nicht beeinflußt, und die Drucke zeigen somit eine befriedigende Nuancenkonstanz.

Die konstitutionell nächstvergleichbaren Farbstoffe der DE-AS 26 53 478 besitzen gegenüber den erfindungsgemäßen Verbindungen (Farbstoffen) den Nachteil, daß die Sulfatogruppen der bekannten Farbstoffe unter bestimmten anwendungstechnischen Bedingungen zur Hydrolyse neigen und die dabei freigesetzte Schwefelsäure Faserschädigungen verursacht.

Die mit den Verbindungen der Formel (1) erhältlichen Färbungen oder Drucke auf Cellulosefasermaterialien besitzen beachtliche Echtheiten ; hiervon sind insbesondere die wichtigsten Fabrikations- und Gebrauchsechtheiten hervorzuheben, wie die Lichtechtheit, die Waschechtheit, beispielsweise bei 60 °C oder 95 °C, die saure und alkalische Walkechtheit, die Wasserechtheit, die Seewasserechtheit, die saure Überfärbeechtheit, die alkalische und saure Schweißechtheit sowie die Plissier-, Bügel- und Reibechtheiten.

Sowohl die natürlichen als auch die synthetischen Polyamidfasermaterialien werden mit den neuen Verbindungen der Formel (1) bevorzugt aus saurem, wäßrigem Färbebad oder saurer, wäßriger Färbeflotte gefärbt. Vorzugsweise wird der gewünschte pH-Wert des Färbebades oder der Färbeflotte mit Essigsäure oder Essigsäure und Ammoniumacetat oder Natriumacetat eingestellt. Um eine gute Egalität der Färbungen zu erreichen oder deren Egalität zu verbessern, ist es vorteilhaft, übliche Egalisierhilfsmittel, beispielsweise Verbindungen auf Basis eines Umsetzungsproduktes von einem Fettamin, wie beispielsweise Stearylamin, mit einem Alkylenoxid, wie Äthylenoxid, und/oder eines Umsetzungsproduktes von Cyanurchlorid mit der etwa dreifach molaren Menge einer Aminobenzolsulfonsäure und/oder einer Aminonaphthalinsulfonsäure, im Färbebad oder der Färbeflotte mitzuverwenden. Die Färbungen können üblicherweise bei Temperaturen von 60-105 °C, vorzugsweise im Ausziehverfahren, insbesondere bei Siedetemperatur des Färbebades, oder auch in einem Druckfärbeapparat bei Temperaturen bis zu 120 °C ausgeführt werden.

Von den erfindungsgemäßen Verbindungen entsprechend der allgemeinen Formel (1) können insbesondere diejenigen als bevorzugt hervorgehoben werden, die in den nachfolgenden Stoffansprüchen 2 bis 8 gesondert beansprucht werden.

Die nachfolgenden Beispiele dienen zur Erläuterung der Erfindung. Die dort angegebenen Teile sind

Gewichtsteile, die Angaben in Prozent beziehen sich auf Gewichtsprozent, sofern nicht anders vermerkt. Volumenteile verhalten sich zu Gewichtsteilen wie Liter zu Kilogramm.

Beispiel 1

28,1 Teile 4-β-Sulfatoäthylsulfonyl-anilin werden unter Rühren in 300 Teile Wasser eingetragen. Nach Zugabe von 36 Teilen 31 %iger Salzsäure wird das Ganze auf 5 °C gekühlt. Bei dieser Temperatur läßt man langsam 20 Volumenteile einer wäßrigen 5 n-Natriumnitritlösung zutropfen und rührt etwa 1 Stunde nach. Überschüssige salpetrige Säure wird mit etwas Amidosulfonsäure zerstört.

Zur Kupplung werden 22,3 Teile des Natriumsalzes von N-Phenyltaurin, gelöst in 150 Teilen Wasser, zugesetzt ; der pH-Wert wird durch allmähliche Zugabe von Natriumbicarbonat auf etwa 5,5 gestellt. Nach beendigter Kupplung wird die gebildete Azoverbindung durch Kaliumchlorid (in einer Menge von 25 Vol.-% des Lösungsvolumens) ausgefällt, abgesaugt und bei 60 °C unter reduziertem Druck getrocknet. Es wird ein orangerotes, salzhaltiges Pulver erhalten, das sich in Wasser mit gelboranger Farbe löst und die Verbindung der Formel

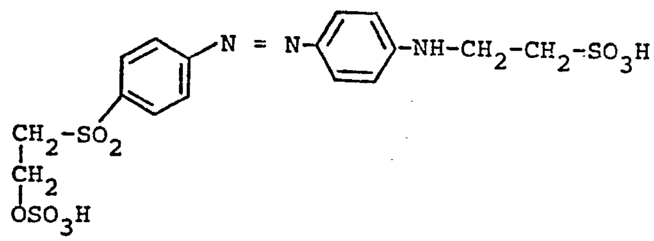

als Alkalimetallsalz, vorwiegend als Kaliumsalz, enthält. Sie eignet sich ausgezeichnet zum Färben (einschließlich Bedrucken) von Baumwolle nach den für faserreaktive Farbstoffe üblichen Applikations- und Fixiermethoden und liefert gelbstichig orange Färbungen und Drucke mit guten Licht- und Waschechtheiten.

Beispiel 1a

Man verfährt wie in Beispiel 1 beschrieben, setzt jedoch anstelle des N-Phenyltaurins als Kupplungskomponente die äquivalente Menge N-(γ-Sulfopropyl)-anilin oder N-(γ-Sulfo-β-hydroxypropyl)-anilin ein und erhält so die entsprechenden Alkalimetallsalze der Azoverbindungen der Formeln

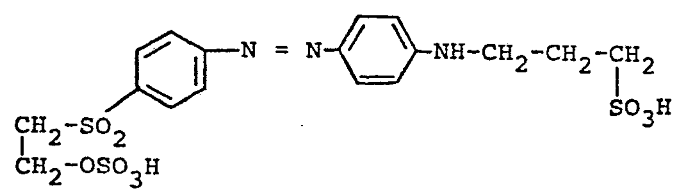

bzw.

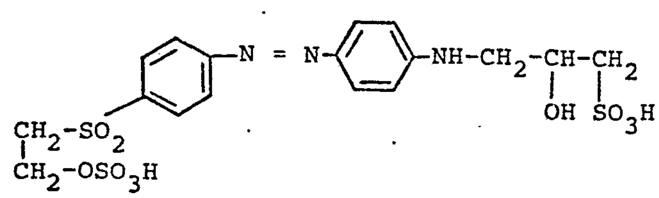

mit zur erfindungsgemäßen Azoverbindung des Beispieles 1 vergleichbarer Nuance und ebenso guten coloristischen Eigenschaften.

Beispiel 2

28,1 Teile 4-β-Sulfatoäthylsulfonyl-anilin werden gemäß der in Beispiel 1 beschriebenen Arbeitsweise diazotiert. Nach Zerstören von überschüssiger salpetriger Säure fügt man eine gekühlte Lösung von

27,15 Teilen N-β-Sulfoäthyl-2-methyl-5-chlor-anilin in Form des Natriumsalzes in 150 Teilen Wasser hinzu und führt die Kupplung anfangs in stark saurem Bereich, später durch Zugabe von Natriumbicarbonat bei einem pH-Wert zwischen 5,5 und 6,0 durch. Nach beendigter Kupplung wird die Azoverbindung durch Zugabe von Kaliumchlorid ausgefällt, durch Filtration isoliert und bei 60 °C unter vermindertem Druck getrocknet.

Es wird ein oranges Pulver erhalten, das neben Elektrolyt überwiegend das Kaliumsalz der Azoverbindung der Formel

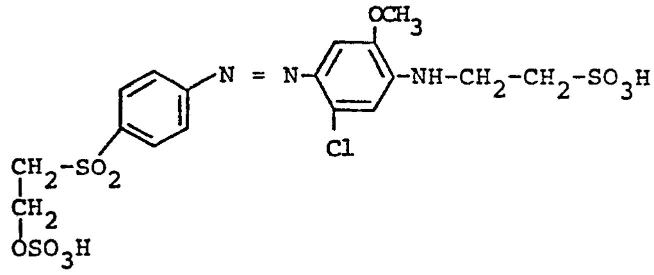

enthält. Sie eignet sich hervorragend als Farbstoff und liefert nach den für faserreaktive Farbstoffe üblichen und bekannten Applikations- und Fixiermethoden auf Baumwolle und Wolle klare goldorange Färbungen und Drucke mit sehr guten Licht- und Naßechtheiten.

Beispiel 2a

Man verfährt wie im Beispiel 2 beschrieben, setzt jedoch anstelle der dort verwendeten Kupplungskomponente die äquivalente Menge an N-(γ-Sulfo-β-hydroxypropyl)-2-methyl-5-chlor-anilin oder N-(γ-Sulfopropyl)-2-methyl-5-chloranilin ein und erhält so die entsprechenden Alkalimetallsalze der Azoverbindungen der Formeln

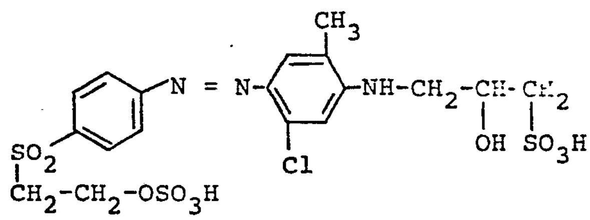

bzw.

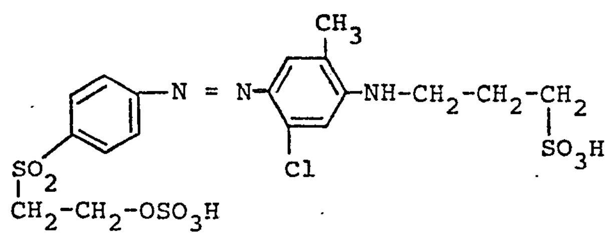

mit zur erfindungsgemäßen Azoverbindung des Beispieles 2 sehr ähnlicher Nuance und ebenso guten coloristischen Eigenschaften.

Beispiel 3

Man verfährt in der in Beispiel 1 angegebenen Verfahrensweise der Diazotierung und Kupplung, setzt jedoch anstelle der dort angegebenen Kupplungskomponente 28,75 Teile des Natriumsalzes von N-β-Sulfoäthyl-2-methoxy-5-chloranilin ein. Nach Ausfällung der so hergestellten Azoverbindung mit Kaliumchlorid aus dem Kupplungsansatz erhält man ein orangerotes Pulver, das neben Elektrolyt überwiegend das Kaliumsalz der Verbindung der Formel

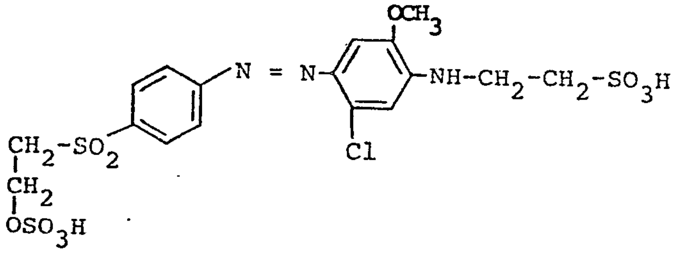

enthält. Die Verbindung eignet sich sehr gut als Farbstoff und liefert auf Baumwolle und Wolle orange Färbungen mit guter Lichtechtheit und sehr guter Beständigkeit gegenüber Waschbehandlungen.

Beispiel 3a

Setzt man anstelle der im Beispiel 3 genannten Kupplungskomponente die äquivalente Menge des Natriumsalzes von N-(γ-Sulfo-β-hydroxypropyl)-2-methoxy-5-chloranilin ein und verfährt ansonsten wie im Beispiel 3 angegeben, so erhält man den entsprechenden erfindungsgemäßen Farbstoff mit sehr ähnlicher Nuance und ebenfalls sehr guten coloristischen Eigenschaften.

Beispiel 4

Es wird in der in Beispiel 1 angegebenen Arbeitsweise der Diazotierung und Kupplung verfahren, jedoch setzt man anstelle der dort verwendeten Kupplungskomponente 31,6 Teile des Natriumsalzes von N-β-Sulfoäthyl-N-äthyl-2-methoxy-5-chloranilin ein. Die so hergestellte Azoverbindung wird aus der Kupplungslösung entweder durch Zugabe von Natriumchlorid oder durch Sprühtrocknung isoliert.

Es wird ein rotes Pulver erhalten, das neben Elektrolyt das Natriumsalz der Azoverbindung der Formel

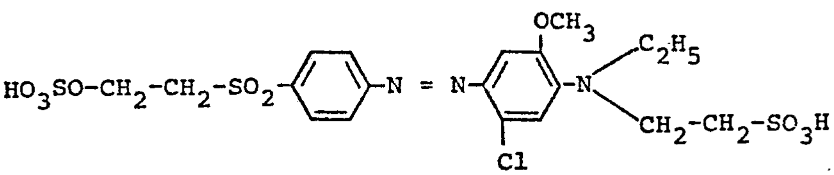

enthält. Sie eignet sich hervorragend als Farbstoff und liefert auf Baumwolle und Wolle gelbstichig rote Färbungen, die sehr gute Echtheitseigenschaften aufweisen.

Beispiel 5

Man verfährt bei der Diazotierung von 28,1 Teilen 4-β-Sulfatoäthylsulfonyl-anilin analog der in Beispiel 1 angegebenen Verfahrensweise und läßt die Diazosuspension langsam in eine gekühlte Lösung von 28,75 Teile des Natriumsalzes von N-β-Sulfoäthyl-2-chlor-5-methoxy-anilin in 200 Teilen Wasser einfließen, wobei der pH-Wert der Kupplungslösung durch Zugabe von Natriumbicarbonat zwischen 5 und 6,5 gehalten wird. Nach beendigter Kupplung wird die entstandene Azoverbindung durch Sprühtrocknung isoliert. Man erhält ein orangerotes Pulver, das neben Elektrolyt das Natriumsalz der Verbindung der Formel

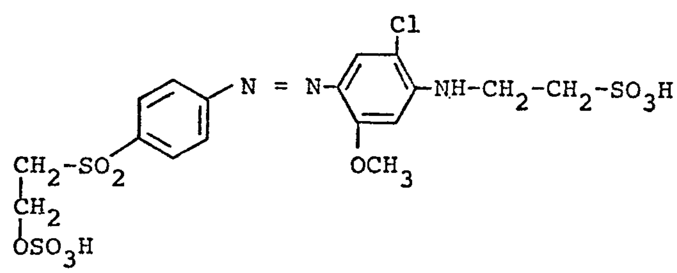

enthält. Diese eignet sich ausgezeichnet als Reaktivfarbstoff zum Färben und Bedrucken von Baumwolle und Wolle und liefert klare, goldorange Färbungen und Drucke, die eine gute Lichtechtheit und sehr gute Naßechtheiten aufweisen.

Beispiel 6

Die Diazotierung von 28,1 Teilen 4-β-Sulfatoäthylsulfonyl-anilin wird analog der in Beispiel 1 angegebenen Arbeitsweise durchgeführt.

Zur Kupplung werden 38,75 Teile des Di-Natriumsalzes von N,N-Bis-(β-sulfoäthyl)-3-chloranilin, gelöst in 200 Teilen Wasser, zugesetzt und der pH-Wert der Kupplungslösung durch allmähliche Zugabe von Natriumbicarbonat auf etwa 5,5 bis 6,0 eingestellt. Nach beendigter Kupplung wird die entstandene

Azoverbindung durch Sprühtrocknung isoliert. Man erhält ein orangefarbenes Pulver, das neben Elektrolyt das Natriumsalz der Verbindung der Formel

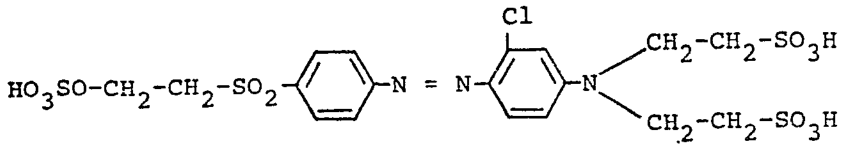

enthält. Dieses eignet sich sehr gut als Reaktivfarbstoff zum Färben (einschließlich Bedrucken) von Baumwolle und Wolle und ergibt klare, goldorange Färbungen und Drucke mit guter Lichtechtheit und sehr guten Naßechtheiten.

Beispiel 7

36 Teile 4-β-Sulfatoäthylsulfonyl-2-brom-anilin werden in 150 Teilen Wasser unter Zugabe von 11,5 Teilen Natriumbicarbonat gelöst ; anschließend setzt man 20 Volumenteile einer wäßrigen 5n-Natriumnitritlösung hinzu. Dieses Gemisch wird nach Abkühlen auf 0-5 °C in ein Gemisch aus 100 Teilen Eis und 36 Volumenteilen 31 %iger Salzsäure gegossen. Die entstehende Diazoniumverbindung fällt hierbei teilweise aus. Es wird etwa eine Stunde lang bei 0-5 °C weitergerührt, sodann überschüssige salpetrige Säure mit etwas Amidosulfonsäure zerstört.

Zur Kupplungsreaktion gibt man diese Diazosuspension in kleinen Anteilen zu einer kalten Lösung von 26,5 Teilen des Natriumsalzes von N-β-Sulfoäthyl-N-äthyl-3-methyl-anilin in 200 Teilen Wasser und hält den pH-Wert durch Einstreuen von Natriumacetat zwischen 4 und 5.

Die gebildete Azoverbindung wird aus der Kupplungslösung entweder durch Zugabe von Natriumchlorid oder durch Sprühtrocknung isoliert. Man erhält ein dunkelrotes Pulver, das neben Elektrolyt das Natriumsalz der Verbindung der Formel

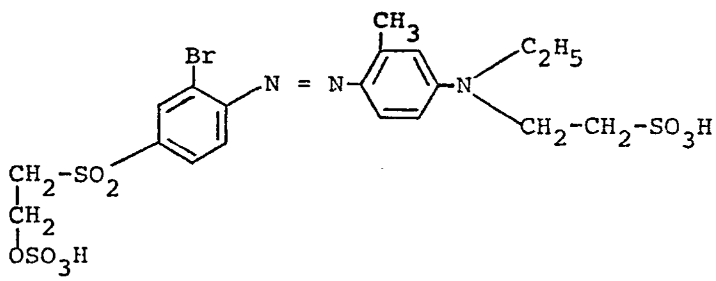

enthält. Diese Verbindung eignet sich sehr gut als Farbstoff und liefert nach den für faserreaktive Farbstoffe üblichen und bekannten Applikations- und Fixiermethoden auf Baumwolle und Wolle farbstarke, gelbstichig rote Färbungen und Drucke mit guten Echtheiten.

Beispiel 8

Wenn man anstelle der im Beispiel 7 verwendeten Kupplungskomponente 29,5 Teile des Natriumsalzes von N-(γ-Sulfo-β-hydroxypropyl)-N-äthyl-3-methylanilin einsetzt, erhält man das Natriumsalz der Verbindung der Formel

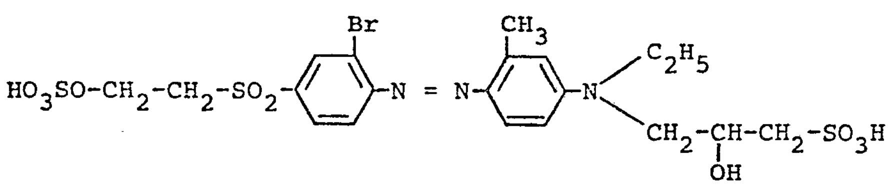

das einen Farbstoff mit gleich guten Eigenschaften und praktisch gleicher Nuance wie der Farbstoff des Beispieles 7 darstellt.

Beispiel 9

Man verfährt in der in Beispiel 7 angegebenen Verfahrensweise der Diazotierung und Kupplung, setzt jedoch anstelle der dort angegebenen Kupplungskomponente 38,1 Teile des Natriumsalzes von N-(γ-Sulfo-β-acetoxypropyl)-N-β-acetoxyäthyl-anilin ein. Nach Abscheidung der so hergestellten Azoverbindung durch Sprühtrocknung erhält man ein rotes Pulver, das neben Elektrolyt das Natriumsalz der

Verbindung der Formel

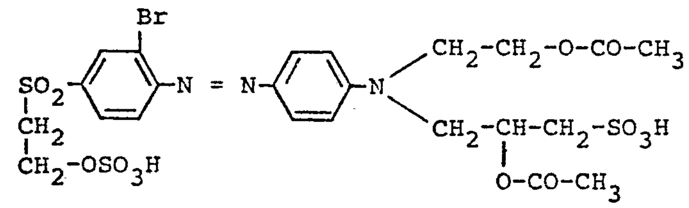

enthält. Diese liefert nach den für faserreaktive Farbstoffe üblichen Färbeweisen auf Baumwolle und Wolle gelbstichig rote Färbungen und Drucke mit guten Allgemeinechtheiten.

Beispiel 10

Es wird in der in Beispiel 7 angegebenen Arbeitsweise der Diazotierung und Kupplung verfahren, jedoch setzt man anstelle der dort verwendeten Kupplungskomponente 25,1 Teile des Natriumsalzes von N-Äthyl-N-sulfoäthyl-anilin ein. Nach Abscheidung der so hergestellten Azoverbindung mit Kaliumchlorid aus dem Kupplungsansatz und Trocknung erhält man ein rotes Pulver, das neben Elektrolyt überwiegend das Kaliumsalz der Verbindung der Formel

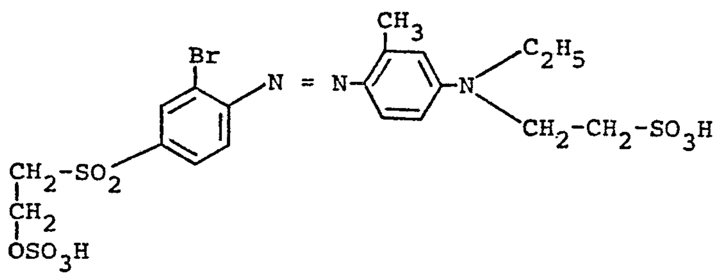

enthält. Dieses liefert nach den für Reaktivfarbstoffen üblichen Applikations- und Fixiermethoden auf Baumwolle und Wolle klare, gelbstichig rote Färbungen und Drucke mit guter Lichtechtheit und sehr guter Beständigkeit gegenüber Waschbehandlungen.

Beispiel 11

Man verfährt nach der in Beispiel 7 beschriebenen Arbeitsweise der Diazotierung und Kupplung, setzt jedoch anstelle der dort verwendeten Kupplungskomponente 36,7 Teile des Di-Natriumsalzes von N,N-Bis-(β-sulfoäthyl)-3-methyl-anilin ein. Nach Isolierung der so hergestellten Azoverbindung durch Sprühtrocknung erhält man ein rotes Pulver, das neben Elektrolyt das Natriumsalz der Verbindung der Formel

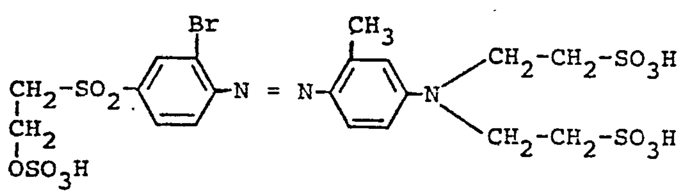

enthält. Dieses liefert nach den für Reaktivfarbstoffe üblichen Färbeweisen auf Baumwolle und Wolle gelbstichig rote Färbungen und Drucke mit sehr guter Beständigkeit gegenüber Waschbehandlungen.

Beispiel 12

41,1 Teile 2-Amino-8-(β-sulfatoäthylsulfonyl)-naphthalin-6-sulfonsäure werden in 200 Teilen Wasser durch Zugabe von Natriumbicarbonat neutral gelöst und mit 20 Volumenteilen 5n-Natriumnitritlösung versetzt. Diese Mischung läßt man langsam zu einem Gemisch aus 200 Teilen Eis und 35 Teilen 31 %iger Salzsäure einlaufen und setzt die Diazotierung bei etwa 10 °C unter einstündigem Nachrühren fort. Überschüssige salpetrige Säure wird durch Zugabe von wenig Amidosulfonsäure zerstört.

Zur Kupplungsreaktion wird eine gekühlte Lösung von 26,5 Teilen des Natriumsalzes von N-β-Sulfoäthyl-N-äthyl-3-methyl-anilin in 150 Teilen Wasser zugegeben ; die Kupplung wird durch Einstellen eines pH-Wertes von 5,5 bis 6 mit Natriumbicarbonat zu Ende geführt. Die gebildete Azoverbindung wird durch Sprühtrocknung isoliert. Man erhält ein dunkelrotes Pulver, das neben Elektrolyt das Natriumsalz

der Verbindung der Formel

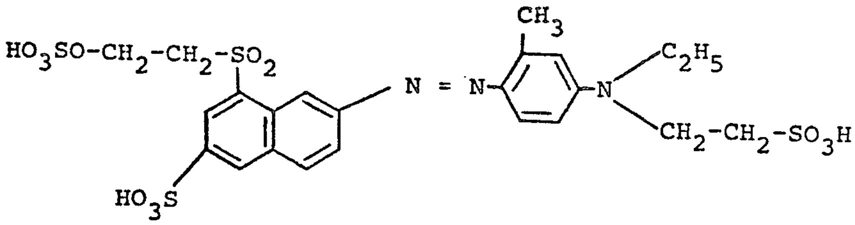

enthält. Dieses liefert auf Baumwolle und Wolle nach den für Reaktivfarbstoffe üblichen Färbe- und Druckverfahren sehr farbstarke gelbstichig rote Färbungen und Drucke mit guter Lichtechtheit und sehr guten Naßechtheiten.

## Beispiel 13

24 Teile 2-Amino-6-vinylsulfonyl-benzthiazol werden in 140 Volumenteilen einer 85 %igen Phosphorsäure unter Erwärmen gelöst und durch Außenkühlung auf – 5 °C abgekühlt. Durch Einstreuen von 6,9 Teilen pulverisiertem Natriumnitrit wird bei gleicher Temperatur diazotiert ; anschließend wird noch 2 Stunden lang nachgerührt. Sodann läßt man eine gekühlte wäßrige Lösung von 25,75 Teilen des Natriumsalzes von N-(2-Chlorphenyl)-taurin bei 0 °C langsam zutropfen und rührt bei gleicher Temperatur etwa 2 Stunden nach. Die ausgefallene Azoverbindung wird abfiltriert, in Wasser angerührt und mit Natriumbicarbonat auf einen pH-Wert von etwa 6 eingestellt ; die erhaltene Lösung wird bei 50-60 °C mit Kieselgur geklärt und die Azoverbindung bei Raumtemperatur mittels Kaliumchlorid abgeschieden, abgesaugt und getrocknet. Man erhält ein dunkelrotes, elektrolythaltiges Pulver, das das Alkalimetallsalz der Verbindung der Formel

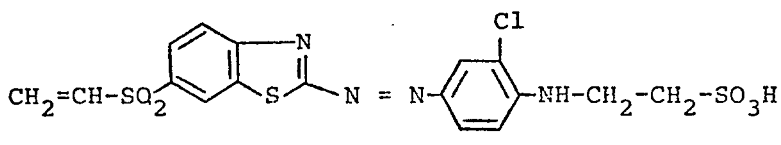

enthält. Es liefert bei Anwendung nach den für Reaktivfarbstoffe üblichen Fixiermethoden auf Baumwolle und Wolle gedeckte, blaustichig rote Färbungen und Drucke mit hoher Farbstärke, die gute Allgemeinechtheiten aufweisen.

## Beispiel 14

Man verfährt nach der in Beispiel 13 angegebenen Arbeitsweise der Diazotierung und Kupplung, setzt jedoch als Kupplungskomponente 35,3 Teile des Di-Natriumsalzes von N,N-Bis-(β-sulfoäthyl)-anilin ein. Die entstandene Azoverbindung, die durch Sprühtrocknung isoliert wird, liegt als Natriumsalz vor und entspricht der Formel

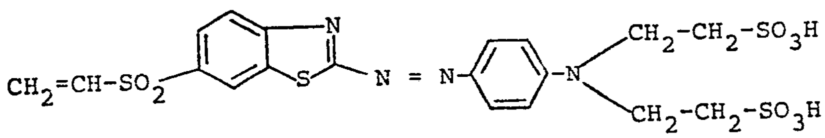

Sie eignet sich hervorragend als Reaktivfarbstoff und liefert, auf Baumwolle und Wolle nach den üblichen Fixiermethoden angewandt, violette Färbungen und Drucke mit sehr guter Beständigkeit gegenüber Waschbehandlungen.

## Beispiele 15 bis 78

Die in den nachfolgenden Tabellenbeispielen durch ihre Diazokomponenten gemäß der allgemeinen Formel (2) und Kupplungskomponenten gemäß der allgemeinen Formel (3) charakterisierten erfindungsgemäßen Azoverbindungen der allgemeinen Formel (1) lassen sich ebenfalls in erfindungsgemäßer Weise, beispielsweise gemäß den Verfahrensweisen der obigen Ausführungsbeispiele, herstellen.

Diese faserreaktiven erfindungsgemäßen Azoverbindungen zeigen sehr gute Farbstoffeigenschaften mit sehr guten anwendungstechnischen Eigenschaften und liefern Färbungen und Drucke auf den in der Beschreibung genannten Fasermaterialien, insbesondere auf Cellulosefasermaterialien und Wolle, nach den für faserreaktive Farbstoffe üblichen Applikations- und Fixiermethoden mit guten bis sehr guten Echtheiten in den angegebenen Farbtönen auf Baumwolle.

| Bsp. | Diazokomponente entsprechend Formel (2) | Kupplungskomponente entsprechend Formel (3) | Farbton auf Baumwolle |
|---|---|---|---|
| 15 | 4-ß-Sulfatoäthyl-sulfonyl-anilin | 3-Chlor-N-(ß-sulfoäthyl)-anilin | goldorange |
| 16 | dito | 2,5-Dichlor-N-(ß-sulfo-äthyl)-anilin | goldgelb |
| 17 | dito | 2-Methyl-N-(ß-sulfoäthyl)-anilin | goldorange |
| 18 | dito | 2,6-Dimethyl-N-(ß-sulfo-äthyl)-anilin | gelbstichig orange |
| 19 | dito | 2,3-Dichlor-N-(ß-sulfo-äthyl)-anilin | gelbstichig orange |
| 20 | dito | 2-Chlor-5-methyl-N-(ß-sulfoäthyl)-anilin | goldgelb |
| 21 | dito | 3-Methoxy-N-(ß-sulfo-äthyl)-anilin | gelbstichig braun |
| 22 | dito | N-Äthyl-N-(ß-sulfoäthyl)-anilin | gelbstichig orange |
| 23 | dito | 2-Methoxy-5-chlor-N-(ß-hydroxyäthyl)-N-(ß-sulfo-äthyl)-anilin | gelbstichig rot |
| 24 | 4-Vinylsulfonyl-anilin | 2-Methoxy-N-(ß-sulfo-äthyl)-anilin | orange |
| 25 | 4-ß-Phosphato-äthylsulfonyl-anilin | N-Butyl-N-(ß-sulfoäthyl)-anilin | gelbstichig orange |
| 26 | 2-Sulfo-4-ß-sulfato-äthylsulfonyl-anilin | 2,5-Dichlor-N-(ß-sulfo-äthyl)-anilin | gelbstichig orange |
| 27 | dito | 3-Methyl-N-benzyl-N-(ß-sulfoäthyl)-anilin | gelbstichig rot |
| 28 | 2-Brom-4-ß-sulfato-äthylsulfonyl-anilin | 3-Methyl-N-(ß-hydroxy-äthyl)-N-(ß-sulfoäthyl)-anilin | gelbstichig rot |
| 29 | dito | N-(ß-Hydroxy-ß-phenyläthyl)-N-(ß-sulfoäthyl)-anilin | gelbstichig rot |
| 30 | 2-Methoxy-5-methyl-4-ß-sulfatoäthyl-sulfonyl-anilin | 2,5-Dichlor-N-(ß-sulfo-äthyl)-anilin | gelbstichig rot |
| 31 | 2-Methoxy-5-methyl-4-ß-sulfatoäthyl-sulfonyl-anilin | 2-Methyl-5-chlor-N-(ß-sul-foäthyl)-anilin | orange |
| 32 | 2-Methoxy-5-ß-sulfato-äthylsulfonyl-anilin | 2,3-Dichlor-N-(ß-sulfo-äthyl)-anilin | gelbstichig orange |
| 33 | 2,6-Dichlor-4-ß-sulfato-äthylsulfonyl-anilin | N-(ß-Sulfoäthyl)-anilin | gelbstichig orange |
| 34 | 4-ß-Sulfatoäthylsul-fonyl-anilin | N-(ß-Acetoxyäthyl)-N-(ß-sulfoäthyl)-anilin | gelbstichig orange |
| 35 | 4-ß-Sulfatoäthylsul-fonyl-anilin | 3-Methyl-N-(ß-cyano-äthyl)-N-(ß-sulfoäthyl)-anilin | orange |
| 36 | dito | 3-Chlor-N-(ß-carboxy-äthyl)-N-(ß-sulfoäthyl)-anilin | gelbstichig orange |
| 37 | 2-Nitro-4-ß-sulfato-äthylsulfonyl-anilin | 3-Chlor-N-(ß-hydroxyäthyl)-N-(ß-sulfoäthyl)-anilin | rot |
| 38 | 2-ß-Sulfatoäthylsul-fonyl-4-nitro-anilin | 3-Methyl-N-(ß-acetoxyäthyl)-N-(ß-sulfoäthyl)-anilin | blaustichig rot |

| Bsp. | Diazokomponente entsprechend Formel (2) | Kupplungskomponente entsprechend Formel (3) | Farbton auf Baumwolle |
|---|---|---|---|
| 39 | 3-ß-Sulfatoäthyl-sulfonyl-anilin | N-(2-Chlor-prop-1-en-3-yl)-N-(ß-sulfoäthyl)-anilin | gelbstichig orange |
| 40 | 2-Methoxy-4-ß-sulfato-äthylsulfonyl-anilin | 3-Methyl-N-äthyl-N-(ß-sulfoäthyl)-anilin | orange |
| 41 | 2,5-Dimethoxy-4-ß-sulfatoäthylsulfonyl-anilin | N-Methyl-N-(ß-sulfoäthyl)-anilin | orange |
| 42 | 2-Carboxy-4-ß-sulfato-äthylsulfonyl-anilin | 3-Chlor-N-(ß-acetoxyäthyl)-N-(ß-sulfoäthyl)-anilin | orange |
| 43 | 2,6-Dimethyl-4-ß-sul-fatoäthylsulfonyl-anilin | N-(ß-Sulfoäthyl)-anilin | orange |
| 44 | 2-Chlor-6-methyl-4-ß-sul-fatoäthylsulfonyl-anilin | dito | orange |
| 45 | 2-Brom-5-ß-sulfato-äthylsulfonyl-anilin | N-Methyl-N-(ß-sulfoäthyl)-anilin | orange |
| 46 | 2,5-Dichlor-4-ß-sulfato-äthylsulfonyl-anilin | N-(ß-Hydroxyäthyl)-N-(ß-sulfoäthyl)-anilin | rotstichig orange |
| 47 | 2,6-Dibrom-4-ß-sulfato-äthylsulfonyl-anilin | N-(ß-Sulfoäthyl)-anilin | orange |
| 48 | 8-ß-Sulfatoäthylsulfonyl-2-naphthylamin-6-sulfon-säure | 2-Methoxy-5-chlor-N-(ß-sulfoäthyl)-anilin | gelbstichig rot |
| 49 | dito | N-(2-Brom-prop-1-en-3-yl)-N-(ß-sulfoäthyl)-anilin | gelbstichig rot |
| 50 | 6-ß-Sulfatoäthyl-sulfonyl-2-naphthyl-amin-1-sulfon-säure | 3-Chlor-N-äthyl-N-(ß-sulfoäthyl)-anilin | rot |
| 51 | 4-ß-Sulfatoäthylsulfonyl-anilin | 2,5-Dichlor-N-(γ-sulfo-ß-hydroxypropyl)-anilin | klares Goldgelb |
| 52 | dito | 2-Chlor-3-methyl-N-(γ-sul-fo-ß-hydroxypropyl)-anilin | klares gelb-stichiges Orange |
| 53 | dito | N-Äthyl-N-(γ-sulfo-ß-hydroxypropyl)-anilin | orange |
| 54 | 4-ß-Sulfatoäthylsulfonyl-anilin | 2-Methoxy-5-chlor-N-äthyl-N-(γ-sulfo-ß-hydroxy-propyl)-anilin | gelbstichig rot |
| 55 | 4-ß-Phosphatoäthyl-sulfonylanilin | N-(ß-Sulfo-α-methyl-äthyl)-anilin | gelbstichig orange |
| 56 | 4-Vinylsulfonyl-anilin | N-Äthyl-N-(γ-sulfo-ß-hydroxypropyl)-anilin | orange |
| 57 | 2-Sulfo-4-ß-sulfato-äthyl-sulfonylanilin | 3-Chlor-N-(ß-chloräthyl)-N-(γ-sulfo-ß-chlorpropyl)-anilin | orange |
| 58 | dito | 3-Methyl-N-(ß-hydroxy-ß-phenyl-äthyl)-N-(γ-sulfo-ß-hydroxypropyl)-anilin | rotstichig orange |
| 59 | 2-Brom-4-ß-sulfatoäthyl-sulfonylanilin | 3-Methyl-N-äthyl-N-(γ-sulfo-ß-acetoxypropyl)-anilin | gelbstichig rot |
| 60 | dito | 2-Methoxy-5-chlor-N-(ß-hydroxyäthyl)-N-(γ-sulfo-ß-hydroxypropyl)-anilin | rot |
| 61 | 2,6-Dichlor-4-ß-sulfato-äthylsulfonylanilin | N-(ß-Sulfo-α-methyl-äthyl)-anilin | gelbstichig orange |

| Bsp. | Diazokomponente entsprechend Formel (2) | Kupplungskomponente entsprechend Formel (3) | Farbton auf Baumwolle |
|---|---|---|---|
| 62 | 2-Nitro-4-ß-sulfatoäthyl-sulfonylanilin | N-Äthyl-N-(γ-sulfo-ß-hydroxypropyl)-anilin | rot |
| 63 | 4-Nitro-2-ß-sulfatoäthyl-sulfonylanilin | 3-Methyl-N-methyl-N-(γ-sulfo-ß-hydroxypropyl)-anilin | blaustichig rot |
| 64 | 2-Carboxy-4-ß-sulfato-äthylsulfonylanilin | 3-Chlor-N-(ß-cyanäthyl)-N-(γ-sulfo-ß-hydroxy-propyl)-anilin | orange |
| 65 | 2,6-Dibrom-4-ß-sulfato-äthylsulfonyl-anilin | N-(ß-Carboxyäthyl)-N-(γ-sulfo-ß-hydroxypropyl)-anilin | orange |
| 66 | 8-ß-Sulfatoäthylsulfonyl-2-aminonaphthalin-6-sulfonsäure | 2-Methoxy-5-chlor-N-(ß-sulfoäthyl)-anilin | gelbstichig rot |
| 67 | 6-ß-Sulfatoäthylsulfonyl-2-aminonaphthalin-1-sulfonsäure | 2-Methoxy-N-(γ-sulfo-ß-hydroxypropyl)-anilin | rot |
| 68 | 8-ß-Sulfatoäthylsulfonyl-2-aminonaphthalin-6-sulfonsäure | 3-Chlor-N-(γ-sulfopropyl)-anilin | rotstichig orange |
| 69 | 2-Methoxy-4-ß-sulfato-äthylsulfonylanilin | N-Methyl-N-(ß-sulfo-α-methyläthyl)-anilin | orange |
| 70 | 2-Methoxy-5-methyl-4-ß-sulfatoäthylsulfonyl-anilin | 3-Methyl-N-äthyl-N-(γ-sulfopropyl)-anilin | gelbstichig rot |
| 71 | 6-Vinylsulfonyl-2-aminobenzthiazol | 2-Chlor-N-(γ-sulfo-ß-hydroxypropyl)-anilin | blaustichig rot |
| 72 | 6-ß-Sulfatoäthylsulfonyl-2-aminobenzthiazol | N-Äthyl-N-(γ-sulfo-propyl)-anilin | bordo |
| 73 | 8-ß-Sulfatoäthylsulfonyl-2-aminonaphthalin | N,N-Bis-(ß-sulfoäthyl)-3-chlor-anilin | rotstichig orange |
| 74 | dito | N,N-Bis-(ß-sulfoäthyl)-3-methylanilin | gelbstichig rot |
| 75 | 4-(ß-Sulfatoäthylsulfo-nylmethyl)-anilin | N-(ß-Hydroxyäthyl)-N-(ß-sulfoäthyl)-3-chlor-anilin | gelbstichig orange |
| 76 | 3,5-Bis-(ß-sulfatoäthyl-sulfonyl-methyl)-4-methyl-anilin | N,N-Bis-(γ-sulfo-ß-hydroxy-propyl)-3-chloranilin | gelbstichig orange |
| 77 | 4-ω-(ß-Sulfatoäthyl-sulfonyl)-äthylanilin | N-Äthyl-N-(ß-sulfoäthyl)-3-methylanilin | rotstichig orange |
| 78 | 5-(ß-Sulfatoäthylsulfo-nylmethyl)-1-naphthyl-amin | N,N-Bis-(ß-sulfoäthyl)-anilin | rotstichig orange |

**Ansprüche**

1. Wasserlösliche Azoverbindungen der allgemeinen Formel (1)

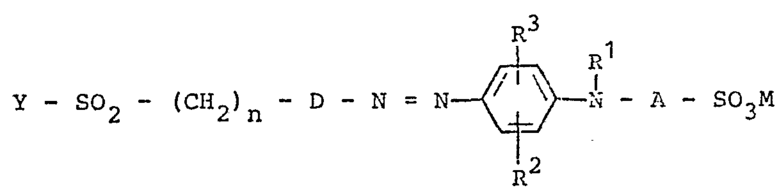

(1)

in welcher bedeuten :

Y ist die Vinylgruppe oder eine Gruppe der Formel $-CH_2-CH_2-Z$, in welcher Z einen organischen oder anorganischen, alkalisch eliminierbaren Rest oder die Hydroxygruppe bedeutet;

n steht für die Zahl Null, 1 oder 2;

D ist der Phenylenrest, der durch einen oder zwei Substituenten aus der Gruppe niederes Alkyl, niederes Alkoxy, Hydroxy, niederes Alkanoylamino, Benzoylamino, durch niederes Alkyl, niederes Alkoxy, Chlor und/oder Sulfo substituiertes Benzoylamino, Chlor, Brom, Fluor und Carboxy und/oder durch eine Nitrogruppe und/oder durch eine Sulfogruppe und/oder durch eine Gruppe der Formel $Y-SO_2-(CH_2)_n-$, in welcher Y die obengenannte Bedeutung hat und n hier die Zahl 1 oder 2 ist, substituiert sein kann, oder ist der Naphthylenrest, der durch 1 oder 2 Sulfogruppen substituiert sein kann, oder ist der Benzthiazol-2-yl-Rest, der im carbocyclischen Ring die angegebene Gruppe der Formel $Y-SO_2-(CH_2)_n-$ gebunden enthält und in diesem Benzolkern weiterhin durch einen Substituenten aus der Gruppe niederes Alkyl, niederes Alkoxy, Hydroxy, niederes Alkanoylamino, Benzoylamino, durch niederes Alkyl, niederes Alkoxy, Chlor und/oder Sulfo substituiertes Benzoylamino, Nitro, Chlor, Brom und Sulfo substituiert sein kann;

$R^1$ ist ein Wasserstoffatom, eine niedere Alkylgruppe, eine niedere Alkenylgruppe oder eine niedere, durch Phenyl und/oder Hydroxy substituierte Alkylgruppe, wobei der Phenylrest durch Methyl, Methoxy und/oder Chlor substituiert sein kann, oder ist eine mit einer Säure veresterte Hydroxyalkylgruppe mit 2 bis 4 C-Atomen in diesem Alkylrest, eine Cyanalkylgruppe mit 2 bis 4 C-Atomen im Alkylrest, eine Carboxy-, Carbonamido- oder Carbalkoxyalkylengruppe mit jeweils 1 bis 4 C-Atomen in dem Alkyl- bzw. Alkylenrest, eine Halogenalkylgruppe mit 2 oder 3 C-Atomen oder eine niedere Halogenalkenylgruppe oder eine Gruppe der nachstehend definierten Formel $-A-SO_3M$;

A ist der Äthylenrest oder ein Propylenrest der Formel

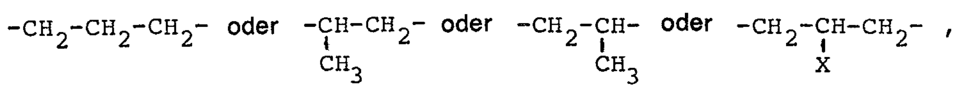

worin X für die Hydroxygruppe oder eine Acyloxygruppe einer niederen Alkancarbonsäure oder einer aromatischen Carbonsäure oder einer niederen Alkylsulfonsäure oder einer aromatischen Sulfonsäure oder für ein Halogenatom steht;

$R^2$ ist ein Wasserstoffatom, eine niedere Alkylgruppe, eine niedere Alkoxygruppe, die durch Hydroxy, Acetoxy, Carboxy, Carbonamid, Cyan oder Halogen substituiert sein kann, oder ist ein Halogenatom oder eine Trifluormethylgruppe;

$R^3$ ist ein Wasserstoffatom, eine niedere Alkylgruppe, eine niedere Alkoxygruppe, die durch Hydroxy, Acetoxy, Carboxy, Carbonamid, Cyan oder Halogen substituiert sein kann, oder ist ein Halogenatom;

M ist ein Wasserstoffatom oder das Äquivalent eines ein-, zwei- oder dreiwertigen Metalls, vorzugsweise Natrium oder Kalium.

2. Verbindungen nach Anspruch 1 der allgemeinen Formel

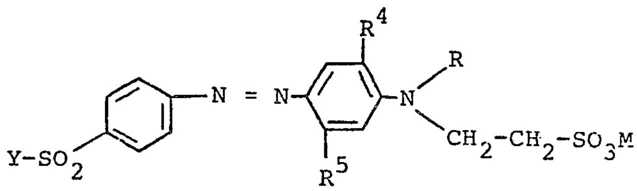

in welcher Y für die Vinylgruppe oder die β-Sulfatoäthyl-Gruppe der Formel $MO_3SO-CH_2-CH_2-$ mit M der in Anspruch 1 genannten Bedeutung steht, $R^4$ ein Wasserstoffatom oder die Methyl- oder Methoxygruppe ist, $R^5$ ein Wasserstoffatom oder ein Chloratom bedeutet, R ein Wasserstoffatom oder die Äthylgruppe darstellt und M die in Anspruch 1 genannte Bedeutung besitzt.

3. Verbindungen nach Anspruch 1 der allgemeinen Formel

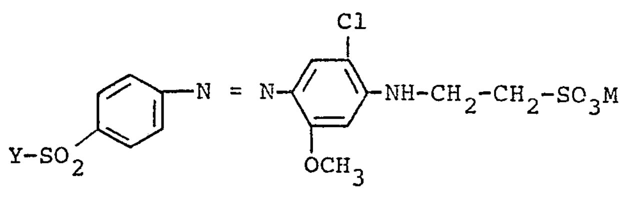

in welcher Y die Vinyl- oder die β-Sulfatoäthyl-Gruppe bedeutet und M die in Anspruch 1 genannte Bedeutung besitzt.

4. Verbindungen nach Anspruch 1 der allgemeinen Formel

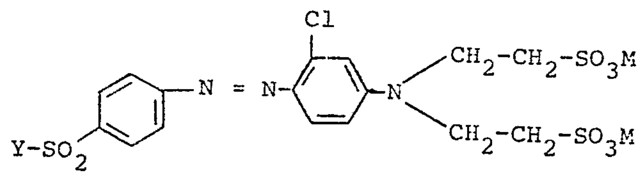

in welcher Y die Vinyl- oder die β-Sulfatoäthyl-Gruppe bedeutet und M die in Anspruch 1 genannte Bedeutung besitzt.

5. Verbindungen nach Anspruch 1 der allgemeinen Formel

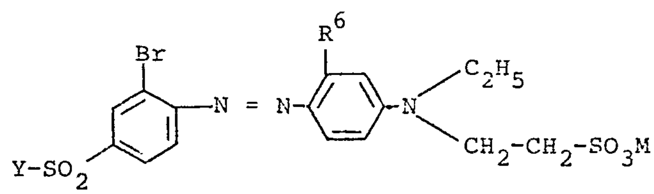

in welcher Y die Vinyl- oder die β-Sulfatoäthyl-Gruppe bedeutet und M die in Anspruch 1 genannte Bedeutung besitzt und $R^6$ für ein Wasserstoffatom oder die Methylgruppe steht.

6. Verbindungen nach Anspruch 1 der allgemeinen Formel

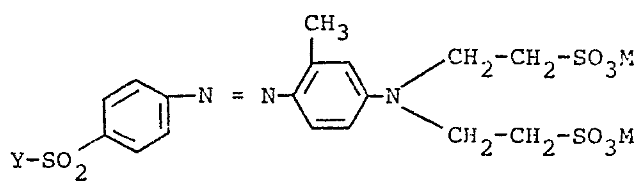

in welcher Y die Vinyl- oder die β-Sulfatoäthyl-Gruppe bedeutet und M die in Anspruch 1 genannte Bedeutung besitzt.

7. Verbindungen nach Anspruch 1 der allgemeinen Formel (1), in welcher

Y die Vinylgruppe oder die β-Chloräthyl-, β-Acetoxyäthyl-, β-Thiosulfatoäthyl-, β-Phosphatoäthyl- oder β-Sulfatoäthyl-Gruppe bedeutet,

n die Zahl Null ist,

D den Phenylenrest darstellt, der durch einen oder zwei Substituenten aus der Gruppe niederes Alkyl, niederes Alkoxy, niederes Alkanoylamino, Chlor, Brom und Carboxy und/oder durch eine Nitrogruppe und/oder durch eine Sulfogruppe substituiert sein kann, oder den Naphthylenrest darstellt, der durch eine Sulfogruppe substituiert sein kann, oder den Benzthiazol-2-yl-Rest darstellt, der im carbocyclischen Ring die angegebene und hier definierte Gruppe der Formel $Y—SO_2—(CH_2)_n—$ gebunden enthält und in diesem Benzolkern weiterhin durch niederes Alkyl, niederes Alkoxy, Chlor oder Sulfo substituiert sein kann,

$R^1$ ein Wasserstoffatom, eine niedere Alkylgruppe, die Benzylgruppe, eine Alkylgruppe von 2-4 C-Atomen, die durch Phenyl, Hydroxy, Acetoxy, Propionyloxy, Cyan, Carboxy, Carbonamido oder Chlor substituiert ist, oder eine niedere Chlor- oder Bromalkenylgruppe oder eine Gruppe der nachstehend definierten Formel $—A—SO_3M$ bedeutet,

A den Äthylenrest oder einen Propylenrest der in Anspruch 1 angegebenen Formeln darstellt, wobei X die Hydroxygruppe, die Acetoxy- oder Propionyloxygruppe oder ein Chlor- oder Bromatom ist, und

$R^2$, $R^3$ und M die in Anspruch 1 genannten Bedeutungen besitzen.

8. Verbindungen nach einem der Ansprüche 1 bis 7, worin Y die β-Sulfatoäthyl-Gruppe ist.

9. Verfahren zur Herstellung der in Anspruch 1 genannten und definierten Verbindungen der allgemeinen Formel (1), dadurch gekennzeichnet, daß man eine Verbindung der allgemeinen Formel (2)

$$Y—SO_2—(CH_2)_n—D—NH_2 \qquad (2)$$

in welcher Y, n und D die in Anspruch 1 genannten Bedeutungen haben, diazotiert und mit einer Kupplungskomponente der allgemeinen Formel (3)

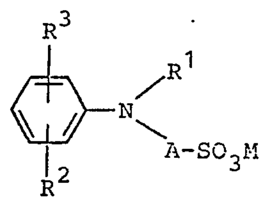

(3)

in welcher M, A, $R^1$, $R^2$ und $R^3$ die in Anspruch 1 genannten Bedeutungen haben, kuppelt und gegebenenfalls im Falle, daß Y für die β-Hydroxyäthyl-Gruppe steht, die Azoverbindung der Formel (1) mit dieser β-Hydroxyäthylgruppe mit einem Sulfatierungsmittel in die entsprechende Azoverbindung der Formel (1) mit Y der β-Sulfatoäthyl-Gruppe überführt oder die Azoverbindung der Formel (1) mit dieser β-Hydroxyäthylgruppe mit einem Phosphatierungsmittel in die entsprechende Azoverbindung der Formel (1) mit Y der β-Phosphatoäthyl-Gruppe, bzw. deren Salze, überführt.

10. Verwendung der in Anspruch 1 genannten und definierten Verbindungen oder der nach Anspruch 9 hergestellten Verbindungen der allgemeinen Formel (1) als Farbstoffe.

11. Verwendung nach Anspruch 10 zum Färben oder Bedrucken von hydroxygruppenhaltigen oder carbonamidgruppenhaltigen Fasern oder von Leder.

**Claims**

1. Water-soluble azo compounds of the general formula (1)

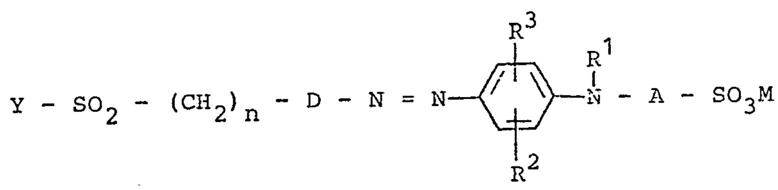

(1)

wherein :

Y is the vinyl group or a group of the formula $-CH_2-CH_2-Z$, in which Z denotes an organic or inorganic radical which can be eliminated under alkaline conditions, or denotes the hydroxy group ;

n represents the number zero, 1 or 2 ;

D is the phenylene radical which may be substituted by one or two substituents from the group comprising lower alkyl, lower alkoxy, hydroxy, lower alkanoylamino, benzoylamino, benzoylamino substituted by lower alkyl, lower alkoxy, chlorine and/or sulfo, chlorine, bromine, fluorine and carboxy, and/or substituted by one nitro group and/or by one sulfo group, or D is the naphthylene radical which can be substituted by 1 or 2 sulfo groups, or D is the benzothiazol-2-yl radical which contains the indicated group of the formula $Y-SO_2-(CH_2)_n-$ bonded in the carbocyclic ring and which can be further substituted in this benzene ring by a substituent from the group comprising lower alkyl, lower alkoxy, hydroxy, lower alkanoylamino, benzoylamino, benzoylamino substituted by lower alkyl, lower alkoxy, chlorine and/or sulfo, nitro, chlorine, bromine and sulfo ;

$R^1$ is a hydrogen atom, a lower alkyl group, a lower alkenyl group or a lower alkyl group which is substituted by phenyl and/or hydroxy, it being possible for the phenyl radical to be substituted by methyl, methoxy and/or chlorine, or is an acid-esterified hydroxyalkyl group having 2 to 4 C-atoms in this alkyl radical, a cyanoalkyl group having 2 to 4 C-atoms in the alkyl radical, a carboxy-, carbonamido- or carbalkoxy-alkylene group each having 1 to 4 C-atoms in the alkyl or alkylene radical, respectively, a halogenoalkyl group having 2 or 3 C-atoms, or a lower halogenoalkenyl group, or a group of the formula $-A-SO_3M$ defined below ;

A is the ethylene radical or a propylene radical of the formula

$-CH_2-CH_2-CH_2-$ or 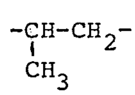 or 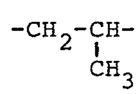 or 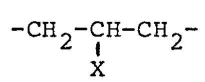 ,

wherein X represents the hydroxy group or an acyloxy group of a lower alkanecarboxylic acid or of an aromatic carboxylic acid or of a lower alkanesulfonic acid or of an aromatic sulfonic acid, or represents a halogen atom ;

$R^2$ is a hydrogen atom, a lower alkyl group, a lower alkoxy group which can be substituted by hydroxy, acetoxy, carboxy, carbamoyl, cyano or halogen, or is a halogen atom or a trifluoromethyl group ;

$R^3$ is a hydrogen atom, a lower alkyl group, a lower alkoxy group which can be substituted by hydroxy, acetoxy, carboxy, carbamoyl, cyano or halogen, or is a halogen atom ;

M is a hydrogen atom or the equivalent of a mono-, di- or trivalent metal, preferably sodium or potassium.

2. Compounds according to claim 1 of the general formula

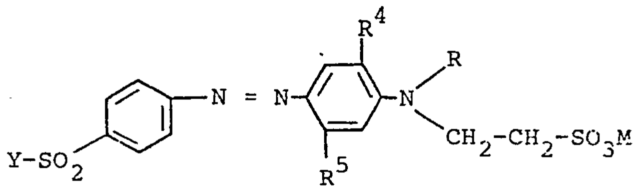

in which Y is the vinyl group or the β-sulfatoethyl group of the formula $MO_3SO—CH_2—CH_2—$ wherein M has the meaning mentioned in claim 1, $R^4$ is a hydrogen atom or the methyl or methoxy group, $R^5$ is a hydrogen atom or a chlorine atom, R is a hydrogen atom or the ethyl group, and M has the meaning mentioned in claim 1.

3. Compounds according to claim 1 of the general formula

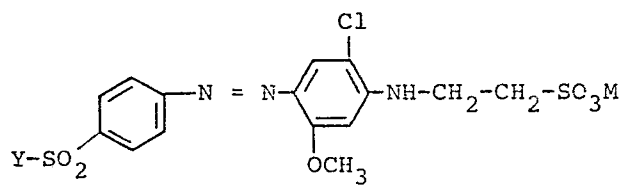

in which Y is the vinyl or the β-sulfatoethyl group and M has the meaning as mentioned in claim 1.

4. Compounds according to claim 1 of the general formula

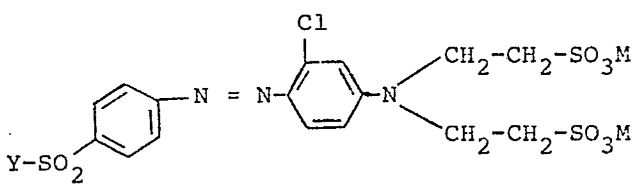

in which Y is the vinyl or the β-sulfatoethyl group and M has the meaning as mentioned in claim 1.

5. Compounds according to claim 1 of the general formula

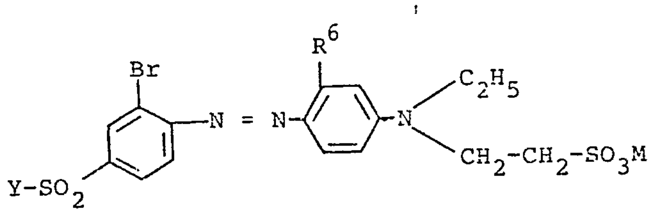

in which Y is the vinyl or the β-sulfatoethyl group, and M has the meaning as mentioned in claim 1, and $R^6$ is a hydrogen atom or the methyl group.

6. Compounds according to claim 1 of the general formula

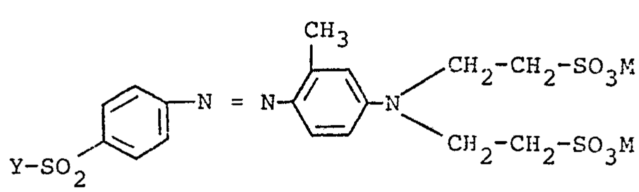

in which Y is the vinyl or the β-sulfatoethyl group and M has the meaning as mentioned in claim 1.

7. Compounds according to claim 1 of the general formula (1) in which

Y is the vinyl group or the β-chloroethyl, β-acetoxyethyl, β-thiosulfatoethyl, β-phosphatoethyl or β-sulfatoethyl group,

n is the number zero,

D is the phenylene radical which can be substituted by one or two substituents from the group comprising lower alkyl, lower alkoxy, lower alkanoylamino, chlorine, bromine and carboxy, and/or be substituted by one nitro group and/or by one sulfo group, or is the naphthylene radical which can be substituted by one sulfo group, or is the benzothiazol-2-yl radical which contains bonded, in the carbocyclic ring, the indicated and defined group $Y—SO_2—(CH_2)_n—$ and which, in this benzene nucleus, may additionally be substituted by lower alkyl, lower alkoxy, chlorine or sulfo,

$R^1$ is a hydrogen atom, a lower alkyl group, the benzyl group, an alkyl group of 2 to 4 carbon atoms which is substituted by phenyl, hydroxy, acetoxy, propionyloxy, cyano, carboxy, carbamoyl or chlorine, or is a lower chloroalkenyl or lower bromoalkenyl group or a group of the formula $—A—SO_3M$ defined below,

A is the ethylene radical or a propylene radical of the formulae mentioned in claim 1, X being herein the hydroxy group, the acetoxy or propionyloxy group or a chlorine or bromine atom, and

$R^2$, $R^3$ and M have the meanings as mentioned in claim 1.

8. Compounds according to one of the claims 1 to 7, wherein Y is the β-sulfatoethyl group.

9. A process for the preparation of the compounds of the general formula (1) mentioned and defined in claim 1, characterized by that a compound of the general formula (2)

$$Y—SO_2—(CH_2)_n—D—NH_2 \qquad (2)$$

in which Y, n and D have the meanings mentioned in claim 1, is diazotized and coupled with a coupling component of the general formula (3)

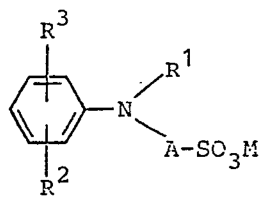

(3)

in which M, A, $R^1$, $R^2$ and $R^3$ have the meanings mentioned in claim 1, and, if Y represents the β-hydroxyethyl group, the azo compound of the formula (1) having this β-hydroxyethyl group is optionally converted into the corresponding azo compound of the formula (1) with Y representing the β-sulfatoethyl group by means of a sulfating agent, or is optionally converted into the corresponding azo compound of the formula (1) with Y representing the β-phosphatoethyl group by means of a phosphating agent, or into their salts, respectively.

10. Use of the compounds mentioned and defined in claim 1, or of the compounds of the general formula (1) prepared according to claim 9, as dyestuffs.

11. Use according to claim 10 for dyeing and printing fibers containing hydroxy groups or carbonamide groups, or leathers.

**Revendications**

1. Composés azoïques solubles dans l'eau qui répondent à la formule générale (1)

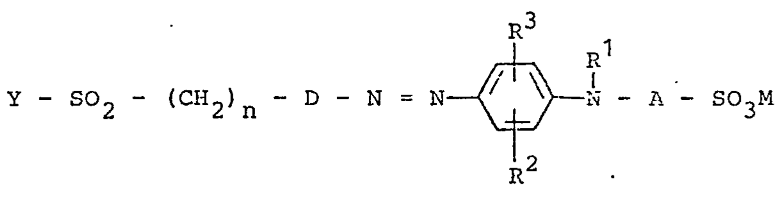

(1)

dans laquelle

Y est un radical vinyle ou un radical $—CH_2—CH_2—Z$ dans lequel Z désigne un radical minéral ou organique éliminable en milieu alcalin ou désigne un radical hydroxy,

n représente l'un des nombres 0, 1 et 2,

D représente un radical phénylène qui peut porter un ou deux substituants pris dans l'ensemble constitué par les alkyles inférieurs, les alcoxy inférieurs, le radical hydroxy, les alcanoylamino inférieurs, les benzoylamino éventuellement porteurs d'un alkyle inférieur, d'un alcoxy inférieur, d'un chlore et/ou d'un sulfo, le chlore, le brome, le fluor et le radical carboxy, et/ou qui peut porter un radical nitro et/ou un

radical sulfo et/ou un radical Y—$SO_2$—$(CH_2)_n$— dans lequel Y a la signification indiquée ci-dessus et n désigne ici le nombre 1 ou le nombre 2, ou un radical naphtylène éventuellement porteur d'un ou deux radicaux sulfo, ou un radical benzothiazolyle-2 qui porte, sur son noyau carbocyclique, le radical Y—$SO_2$—$(CH_2)_n$— qui a été défini ci-dessus et peut en outre porter, sur ce noyau benzo, un substituant pris dans l'ensemble constitué par les alkyles inférieurs, les alcoxy inférieurs, le radical hydroxy, les alcanoylamino inférieurs, les benzoylamino éventuellement porteurs d'un alkyle inférieur, d'un alcoxy inférieur, d'un chlore et/ou d'un sulfo, le radical nitro, le chlore, le brome et le radical sulfo,

$R^1$ est un atome d'hydrogène, un alkyle inférieur, un alcényle inférieur ou un alkyle inférieur porteur d'un phényle et/ou d'un hydroxy (le radical phényle pouvant lui-même porter un méthyle, un méthoxy et/ou un chlore), ou est un hydroxyalkyle estérifié par un acide et contenant de 2 à 4 atomes de carbone dans son radical alkyle, un cyanalkyle contenant de 2 à 4 atomes de carbone dans son radical alkyle, un carboxy-alkylène, un carbamoyl-alkylène ou un alcoxycarbonyl-alkylène contenant chacun de 1 à 4 atomes de carbone dans le radical alkylène et éventuellement le radical alkyle, un halogéno-alkyle à 2 ou 3 atomes de carbone, un halogéno-alcényle inférieur ou un radical —A—$SO_3M$ tel que défini ci-dessous,

A représente un radical éthylène, un radical propylène de formule

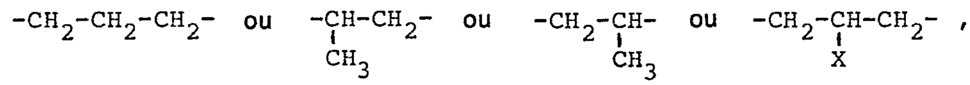

où X représente un radical hydroxy ou un radical acyloxy dérivant d'un acide alcanoïque inférieur ou d'un acide carboxylique aromatique ou d'un acide alcanesulfonique inférieur ou d'un acide sulfonique aromatique, ou représente un atome d'halogène,

$R^2$ est un atome d'hydrogène, un alkyle inférieur, un alcoxy inférieur éventuellement porteur d'un hydroxy, d'un acétoxy, d'un carboxy, d'un carbamoyle, d'un cyano ou d'un halogène, ou est un atome d'halogène ou un radical trifluoro-méthyle,

$R^3$ est un atome d'hydrogène, un alkyle inférieur, un alcoxy inférieur éventuellement porteur d'un hydroxy, d'un acétoxy, d'un carboxy, d'un carbamoyle, d'un cyano ou d'un halogène, ou est un atome d'halogène,

M est un atome d'hydrogène ou l'équivalent d'un métal monovalent, divalent ou trivalent, plus particulièrement le sodium ou le potassium.

2. Composés selon la revendication 1 qui répondent à la formule générale

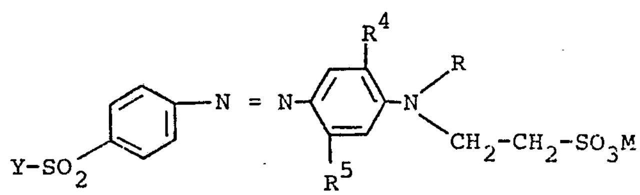

dans laquelle Y représente un radical vinyle ou un radical β-sulfato-éthyle de formule $MO_3$—SO—$CH_2$—$CH_2$— dans lequel M a la signification donnée à la revendication 1, $R^4$ représente un atome d'hydrogène ou un radical méthyle ou méthoxy, $R^5$ représente un atome d'hydrogène ou de chlore, R représente un atome d'hydrogène ou un radical éthyle et M a la signification qui a été donnée à la revendication 1.

3. Composés selon la revendication 1 qui répondent à la formule générale

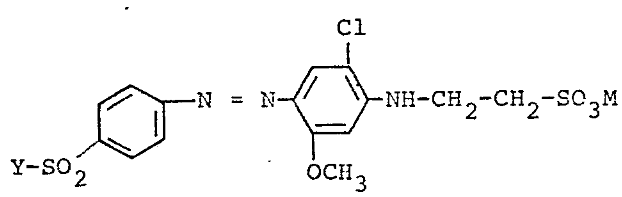

dans laquelle Y représente un radical vinyle ou β-sulfatoéthyle et M a la signification donnée à la revendication 1.

4. Composés selon la revendication 1 qui répondent à la formule générale

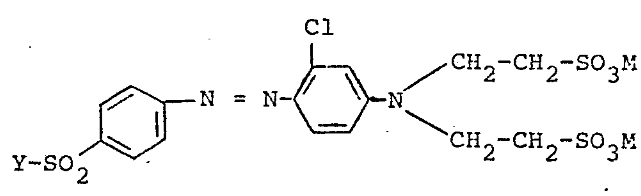

dans laquelle Y représente un radical vinyle ou β-sulfatoéthyle et M a la signification donnée à la revendication 1.

5. Composés selon la revendication 1 qui répondent à la formule générale

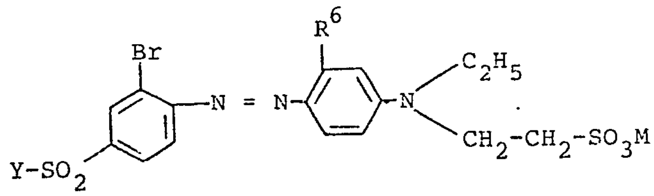

dans laquelle Y représente un radical vinyle ou β-sulfatoéthyle, M a la signification donnée à la revendication 1 et $R^6$ représente un atome d'hydrogène ou un radical méthyle.

6. Composés selon la revendication 1 qui répondent à la formule générale

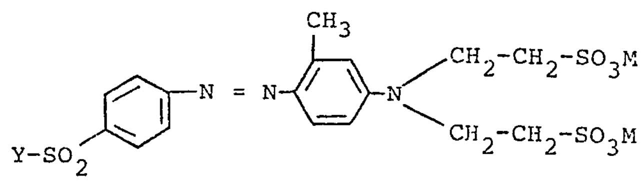

dans laquelle Y représente un radical vinyle ou β-sulfatoéthyle et M a la signification donnée à la revendication 1.

7. Composés selon la revendication 1 qui répondent à la formule (1) dans laquelle :

Y représente un radical vinyle, β-chloréthyle, β-acétoxyéthyle, β-thio-sulfato-éthyle, β-phosphato-éthyle ou β-sulfato-éthyle,

n est égal à 0,

D représente un radical phénylène éventuellement porteur d'un ou deux substituants pris dans l'ensemble constitué par les alkyles inférieurs, les alcoxy inférieurs, les alcanoylamino inférieurs, le chlore, le brome et le radical carboxy et/ou d'un radical nitro et/ou d'un radical sulfo, ou représente un radical naphtylène éventuellement porteur d'un radical sulfo, ou représente un radical benzothiazolyle-2 dont le noyau carbocyclique (benzo) porte le radical $Y—SO_2—(CH_2)_n—$ défini ici et peut en outre porter un alkyle inférieur, un alcoxy inférieur, un chlore ou un sulfo,

$R^1$ représente un atome d'hydrogène, un alkyle inférieur, un benzyle, un alkyle en $C_2—C_4$ porteur d'un phényle, d'un hydroxy, d'un acétoxy, d'un propionyloxy, d'un cyano, d'un carboxy, d'un carbamoyle ou d'un chlore, ou représente un radical chloralcényle ou bromalcényle inférieur ou un radical $—A—SO_3M$ défini ci-dessous,

A représente un radical éthylène ou un radical propylène répondant à l'une des formules représentées dans la revendication 1, le symbole X désignant un radical hydroxy, acétoxy ou propionyloxy ou un atome de chlore ou de brome, et

$R^2$, $R^3$ et M ont les significations données à la revendication 1.

8. Composés selon l'une quelconque des revendications 1 à 7 dans lesquels Y représente un radical β-sulfatoéthyle.

9. Procédé de préparation des composés de formule générale (1) selon la revendication 1, procédé caractérisé en ce qu'on diazote un composé répondant à la formule générale (2)

$$Y—SO_2—(CH_2)_n—D—NH_2 \qquad (2)$$

dans laquelle Y, n et D ont les significations données à la revendication 1, et on copule le diazoïque avec un copulant répondant à la formule générale (3) :

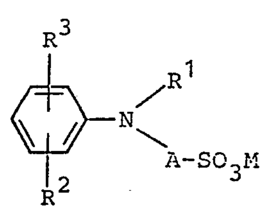
(3)

dans laquelle M, A, $R^1$, $R^2$ et $R^3$ ont les significations données à la revendication 1, et éventuellement, dans le cas où Y représente un radical β-hydroxyéthyle, on transforme le composé azoïque de formule (1), qui renferme ce radical β-hydroxyéthyle, au moyen d'un agent de sulfatation, en le composé azoïque de

formule (1) correspondant dans lequel Y est un radical β-sulfato-éthyle, ou on transforme le composé azoïque de formule (1) qui contient ce radical β-hydroxyéthyle, au moyen d'un agent de phosphatation, en le composé azoïque de formule (1) correspondant dans lequel Y est un radical β-phosphato-éthyle, ou en leurs sels.

10. Application des composés selon la revendication 1 ou des composés préparés selon la revendication 9, qui répondent à la formule générale (1), comme colorants.

11. Application selon la revendication 10 à la teinture ou à l'impression de fibres contenant des radicaux hydroxy ou des radicaux carbamoyles, ou du cuir.